# EUROPEAN PATENT APPLICATION

(11) **EP 4 269 202 A1**
(43) Date of publication of application: **01.11.2023**
(21) Application number: 21835389.4
(22) Date of filing: 07.12.2021
(51) Int. Cl.: B60W 30/14, B60W 30/16, B60W 50/14, B60W 30/18

(54) **CONTROL DEVICE AND CONTROL METHOD FOR CONTROLLING OPERATION OF MOTORCYCLE**

(30) Priority: 23.12.2020 JP 2020214073
(71) Applicant: Robert Bosch GmbH, 70442 Stuttgart (DE)
(72) Inventor: PFAU, Lars, Yokohama-shi, Kanagawa 224-8501 (JP)
(74) Representative: Isarpatent
(86) International application number: PCT/IB2021/061393
(87) International publication number: WO 2022/136990

(57) **Abstract**

The present disclosure provides a controller and a control method that appropriately assists a rider to drive of a motorcycle.

An acquisition section (51) acquires a state information of another motorcycle (200) via wireless communication other than the motorcycle (100). The state information of the other motorcycle (200) is information about a travel state of the other motorcycle (200) turning a curve in a traveling direction of the motorcycle (100). A safety operation execution section (53) causes the motorcycle (100) to perform a safety operation in response to the state information of the other motorcycle (200) acquired by the acquisition section (51) when the motorcycle (100) is performing the automatic cruise operation.

## Description

### TECHNICAL FIELD

The present disclosure relates to a controller and a control method for maneuvering a motorcycle capable of performing automatic cruise operation.

### BACKGROUND

Techniques for maneuvering a motorcycle (a two-wheeled motor vehicle or a three-wheeled motor vehicle) to perform an automatic cruise operation are known. The automatic cruise operation automatically controls a speed of the motorcycle without relying on an accelerating/decelerating operation by a rider.

### Citation List

### Patent Literature

PTL 1: WO 2018/172870

### SUMMARY

### Technical Problem

When a lane is curved ahead of the motorcycle in a traveling direction of the motorcycle, an amount of acquired information is limited. In addition, since the rider's attention tends to become distracted when the automatic cruise operation is performed, a larger amount of the information is needed to be acquired. Furthermore, behavior/movement of the motorcycle is different from other types of vehicles (for example, a passenger car, a truck, and the like). As such, unique information, which is specific to the motorcycle, is required for the automatic cruise operation of the motorcycle. For example, when the motorcycle turns a curve during the automatic cruise operation, a lot of motorcycle specific information is required. If the amount of information is insufficient, it may be difficult to assist the rider of the motorcycle to drive of the motorcycle appropriately.

The present disclosure addresses the above-described issues and therefore it is an objective of the present disclosure to provide a controller that appropriately assists a rider of a motorcycle to drive the motorcycle. It is another objective of the present disclosure to provide a control method for appropriately assisting a rider of a motorcycle to drive the motorcycle.

### Solution to Problem

As one aspect of the present disclosure, a controller maneuvers a motorcycle. The controller includes an automatic cruise execution section, an acquisition section, and a safety operation execution section. The automatic cruise execution section is configured to cause the motorcycle to perform an automatic cruise operation. The acquisition section is configured to acquire a state information of another motorcycle via wireless communication. The state information of the other motorcycle is information about a travel state of the other motorcycle turning a curve in a traveling direction of the motorcycle. The safety operation execution section is configured to cause the motorcycle to perform a safety operation in response to the state information of the other motorcycle acquired by the acquisition section. The safety operation execution section is configured to cause the motorcycle to perform the safety operation when the motorcycle is performing the automatic cruise operation.

As one aspect of the present disclosure, a control method for maneuvering a motorcycle includes: executing an automatic cruise operation of the motorcycle by using an automatic cruise execution section included in a controller; acquiring a state information of another motorcycle via wireless communication by using an acquisition section included in the controller, the state information of the other motorcycle being information about a travel state of the other motorcycle turning a curve in a traveling direction of the motorcycle; and executing, by using a safety operation execution section included in the controller, a safety operation of the motorcycle in response to the state information of the other motorcycle acquired in the acquisition step, the safety operation execution section configured to cause the motorcycle to perform the safety operation when the motorcycle is performing the automatic cruise operation.

### Advantageous Effects of Invention

According to the controller and the control method of the present disclosure, the acquisition section acquires the state information of the other motorcycle via wireless communication. The state information of the other motorcycle is information about the travel state of the other motorcycle turning a curve in a traveling direction of the motorcycle. The safety operation execution section causes the motorcycle to perform the safety operation in response to the state information of the other motorcycle acquired by the acquisition section. The safety operation execution section causes the motorcycle to perform the safety operation when the motorcycle is performing the automatic cruise operation. Therefore, when the motorcycle is under the automatic cruise operation and is turning a curve, the controller and the control method can acquire the motorcycle specific information and compensate the shortage of information. the acquisition section acquires the other vehicle travel state information, As a result, it is possible to appropriately assist a rider to drive of the motorcycle.

### DRAWINGS

Fig. 1 is a view illustrating a mounted state of a rider-assistance system according to an embodiment of the present disclosure to a motorcycle.
Fig. 2 is a diagram for explaining a system configuration of the rider-assistance system according to the embodiment of the present disclosure.
Fig. 3 is a chart illustrating an example of a control flow by a controller in the rider-assistance system according to the embodiment of the present disclosure.

### DETAILED DESCRIPTION

A description will hereinafter be made on a controller and a control method according to the present disclosure with reference to the drawings.

A term "motorcycle" means a two-wheeled motor vehicle or a three-wheeled motor vehicle among straddle-type vehicles straddled by riders. The motorcycles include: the two-wheeled motor vehicle or the three-wheeled motor vehicle that has an engine as a propelling source; the two-wheeled motor vehicle or the three-wheeled motor vehicle that has an electric motor as the propelling source; and the like, and examples of the motorcycle are a bike, a scooter, and an electric scooter. The following description will be made on a case where the motorcycle is the two-wheeled motor vehicle. However, the motorcycle may be the three-wheeled motor vehicle.

A configuration, operation, and the like, which will be described below, merely constitute one example. The controller and the control method according to the present disclosure are not limited to a case with such a configuration, such operation, and the like. The same or similar description will appropriately be simplified or will not be made below. A detailed structure will appropriately be illustrated in a simplified manner or will not be illustrated.

### Embodiment

A description will hereinafter be made on a rider-assistance system according to an embodiment.

### <Configuration of Rider-Assistance System>

A description will be made on a configuration of the rider-assistance system according to the embodiment.

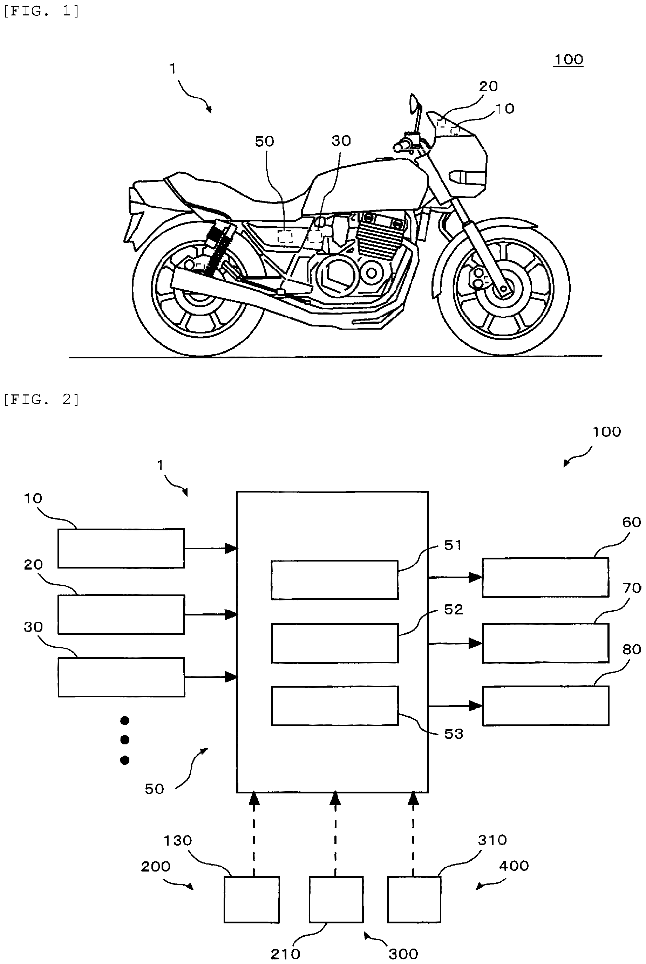

Fig. 1 is a view illustrating a mounted state of the rider-assistance system according to the embodiment of the present disclosure to the motorcycle. Fig. 2 is a diagram for explaining a system configuration of the rider-assistance system according to the embodiment of the present disclosure.

As illustrated in Fig. 1 and Fig. 2, a rider-assistance system 1 is mounted to a motorcycle 100. The rider-assistance system 1 at least includes: a surrounding environment detector 10 that detects surrounding environment in front of the motorcycle 100; an input device 20 that is operated by a rider; a travel state detector 30 that detects a travel state of the motorcycle 100; and a controller (ECU) 50.

The surrounding environment detector 10 monitors an area in front of the motorcycle 100 and detects various types of information about the area in front of the motorcycle 100. More specifically, the surrounding environment detector 10 detects a predicted route that is a route predicted to be traveled by the motorcycle 100 in the future. The surrounding environment detector 10 may detect another physical quantity that can substantially be converted to the predicted route. The surrounding environment detector 10 also detects a distance from the motorcycle 100 to a preceding vehicle. The surrounding environment detector 10 may detect another physical quantity that can substantially be converted to the distance from the motorcycle 100 to the preceding vehicle.

For example, in the case where plural vehicles travel in front of the motorcycle 100, based on the predicted route of the motorcycle 100 and behavior of each of the plural vehicles, the surrounding environment detector 10 selects the vehicle that travels at the closest position to the motorcycle 100 on the same lane as a travel lane of the motorcycle 100 as the preceding vehicle that is a target for detecting the distance thereof from the motorcycle 100. At this time, in addition to the vehicle that travels at the closest position to the motorcycle 100 on the same lane as the travel lane of the motorcycle 100, the vehicle traveling ahead of several vehicles in front of the motorcycle 100, the vehicle traveling on an adjacent lane to the travel lane of the motorcycle 100, or the like may be included as the preceding vehicle that is the target for detecting the distance thereof from the motorcycle 100. Adaptive cruise control operation, which will be described below, is performed by using a detection result of the distance from the motorcycle 100 to the preceding vehicle. Here, in the case where cruise control operation, which will be described below, is performed, the distance from the motorcycle 100 to the preceding vehicle may not be detected.

As the surrounding environment detector 10, for example, a camera that captures an image of the area in front of the motorcycle 100 and a radar capable of detecting the distance from the motorcycle 100 to the target in front are used. In such a case, for example, white lines, guardrails, and the like are recognized by using the image captured by the camera. Then, by using recognition results of these and a detection result by the radar, the predicted route of the motorcycle 100 can be detected. In addition, for example, the preceding vehicle is recognized by using the image captured by the camera. Then, by using a recognition result of the preceding vehicle and the detection result by the radar, the distance from the motorcycle 100 to the preceding vehicle can be detected. The surrounding environment detector 10 is provided to a front portion of a vehicle body, for example.

The configuration of the surrounding environment detector 10 is not limited to that in the above example. For example, the function of detecting the predicted route of the motorcycle 100 and the function of detecting the distance from the motorcycle 100 to the preceding vehicle by the surrounding environment detector 10 may be implemented by the radar only or may be implemented by a stereo camera. Alternatively, the function of detecting the predicted route of the motorcycle 100 by the surrounding environment detector 10 may be implemented by using a signal received from the Global Positioning System (GPS) satellite and map information, for example.

The input device 20 accepts a travel mode selecting operation by the rider and outputs information about a travel mode selected by the rider. Here, in the motorcycle 100, the controller 50 can perform the adaptive cruise control operation or the cruise control operation. Each of the adaptive cruise control operation and the cruise control operation corresponds to an example of automatic cruise operation for automatically controlling a speed of the motorcycle 100 without relying on an accelerating/decelerating operation by the rider. In the cruise control operation, the speed of the motorcycle 100 is controlled by the controller 50 such that the motorcycle 100 travels at a target speed set by the rider. Meanwhile, in the adaptive cruise control operation, in addition to such control, an inter-vehicular distance from or collision avoidance performance with the preceding vehicle is maintained. That is, in the adaptive cruise control operation, in the case where there is no preceding vehicle, the speed of the motorcycle 100 is controlled by the controller 50 such that the motorcycle 100 travels at the target speed set by the rider. On the other hand, in the case where there is the preceding vehicle, the speed of the motorcycle 100 is controlled by the controller 50 such that the motorcycle 100 travels at a speed that is equal to or lower than the target speed and aims to maintain the inter-vehicular distance from or the collision avoidance performance with the preceding vehicle. By using the input device 20, the rider can select a travel mode in which none of the automatic cruise operation is performed, a travel mode in which the adaptive cruise control operation is performed, or a travel mode in which the cruise control operation is performed. As the input device 20, a lever, a button, a touchscreen, or the like is used, for example. The input device 20 is provided to a handlebar, for example.

The travel state detector 30 includes a front-wheel rotational frequency sensor, a rear-wheel rotational frequency sensor, and the like, for example. Each of the front-wheel rotational frequency sensor and the rear-wheel rotational frequency sensor detects a rotational frequency of a wheel and outputs a detection result. Each of the front-wheel rotational frequency sensor and the rear-wheel rotational frequency sensor may detect another physical quantity that can substantially be converted to the rotational frequency of the wheel.

In addition, the travel state detector 30 includes an inertial measurement unit, for example. The inertial measurement unit includes a three-axis gyroscope sensor and a three-directional acceleration sensor, and outputs detection results of three-axis acceleration and three-axis angular velocities of the motorcycle 100. The inertial measurement unit may detect other physical quantities that can substantially be converted to the three-axis acceleration and the three-axis angular velocities.

Furthermore, the travel state detector 30 includes a braking force measurement unit and a drive power measurement unit, for example. For example, the braking force measurement unit outputs detection results such as an operation amount of a brake operation by the rider and an actual braking force generated by a braking device 60. The braking force measurement unit may detect other physical quantities that can substantially be converted to the operation amount of the brake operation by the rider and the actual braking force generated by the braking device 60. For example, the drive power measurement unit outputs detection results such as an operation amount of an accelerator operation by the rider and actual drive power generated by a drive device 70. The drive power measurement unit may detect other physical quantities that can substantially be converted to the operation amount of the accelerator operation by the rider and the actual drive power generated by the drive device 70.

Moreover, the travel state detector 30 includes: a receiver that receives the signal from the GPS satellite; and a storage section for the map information, for example. Another configuration capable of detecting a position or an traveling direction of the motorcycle 100 may be adopted.

The controller 50 controls operation of the motorcycle 100. For example, the controller 50 is partially or entirely constructed of a microcomputer, a microprocessor unit, or the like. Alternatively, the controller 50 may partially or entirely be constructed of a member in which firmware or the like can be updated, or may partially or entirely be a program module or the like that is executed by a command from a CPU or the like, for example. The controller 50 may be provided as one unit or may be divided into multiple units, for example.

As illustrated in Fig. 2, the controller 50 includes an acquisition section 51, an automatic cruise execution section 52, and a safety operation execution section 53.

The acquisition section 51 acquires information that is output from each of the devices mounted to the motorcycle 100, and outputs the acquired information to the automatic cruise execution section 52. More specifically, the acquisition section 51 acquires surrounding environment information based on the information output from the surrounding environment detector 10, acquires rider setting information based on the information output from the input device 20, and acquires travel state information of the motorcycle 100 based on the information output from the travel state detector 30. The travel state information includes information about at least one of the speed, deceleration, the position, and the traveling direction of the motorcycle 100.

The automatic cruise execution section 52 controls operation of each of the devices (the braking device 60, the drive device 70, and the like) mounted to the motorcycle 100, so as to control the drive power and the braking force to be generated to the motorcycle 100. In this way, the automatic cruise execution section 52 controls the acceleration/deceleration of the motorcycle 100 and performs the automatic cruise operation (that is, the adaptive cruise control operation or the cruise control operation). In the case where the rider performs the accelerating/decelerating operation (that is, the accelerator operation or the brake operation) during the automatic cruise operation, the automatic cruise execution section 52 cancels or temporarily stops the automatic cruise operation.

The acquisition section 51 acquires other vehicle travel state information via wireless communication and outputs the acquired other vehicle travel state information to the safety operation execution section 53. The other vehicle travel state information is information about a travel state of another motorcycle 200 that turns a curve in the traveling direction of the motorcycle 100. Preferably, the other motorcycle 200 is a motorcycle that travels on the same lane as the motorcycle 100. The acquisition section 51 acquires the other vehicle travel state information based on information that is output from a travel state detector 130 of the other motorcycle 200. The travel state detector 130 may be the same as the travel state detector 30 mounted to the motorcycle 100 or may differ therefrom. That is, the other vehicle travel state information includes information about at least one of a speed, deceleration, a position, and a traveling direction of the other motorcycle 200. In the case where position information about the motorcycle that is detected by the surrounding environment detector 10 and is located around the motorcycle 100 is information indicating that such a motorcycle turns the curve in the traveling direction of the motorcycle 100 and is located within a specified distance from the motorcycle 100, the acquisition section 51 identifies such a motorcycle as the other motorcycle 200. In the case where, due to a blind spot produced by the curve, the position information about such a motorcycle cannot be detected by the surrounding environment detector 10, or in the case where only the cruise control operation can be performed as the automatic cruise operation and the surrounding environment detector 10 is not mounted, the position information about the motorcycle can be detected by wireless communication therewith. In other words, the other motorcycle 200 preferably includes: a receiver for the signal from the GPS satellite; and a storage section for the map information, for example. Here, the position information about the other motorcycle 200 may be detected by another means.

The other vehicle travel state information may be information about a travel state of the other motorcycle 200 that is output from a surrounding environment detector 210 mounted to a vehicle 300 around the other motorcycle 200 or from a surrounding environment detector 310 provided to infrastructure equipment 400 around the other motorcycle 200. Each of the surrounding environment detector 210 and the surrounding environment detector 310 may be the same as the surrounding environment detector 10 mounted to the motorcycle 100 or may differ therefrom. The other motorcycle 200, the nearby vehicle 300, or the nearby infrastructure equipment 400 can recognize the position of itself. Thus, by acquiring information about the position thereof and information about a relative position of a motorcycle, which is located around the motorcycle 100, to such a position, the acquisition section 51 can identify the other motorcycle 200.

The acquisition section 51 may acquire the other vehicle travel state information by the direct wireless communication between a communication device of the motorcycle 100 and a communication device of the other motorcycle 200, the nearby vehicle 300, or the nearby infrastructure equipment 400. Alternatively, the acquisition section 51 may acquire the other vehicle travel state information by the indirect wireless communication between the communication device of the motorcycle 100 and the communication device of the other motorcycle 200, the nearby vehicle 300, or the nearby infrastructure equipment 400 via another medium (for example, a network server, a mobile terminal, or the like).

The safety operation execution section 53 determines whether it is necessary to cause the motorcycle 100 to perform safety operation based on the other vehicle travel state information acquired by the acquisition section 51. If determining that it is necessary, the safety operation execution section 53 causes the motorcycle 100 to perform the safety operation. The safety operation is operation to improve safety of the rider of the motorcycle 100.

For example, a notification device 80 is mounted to the motorcycle 100. By using the notification device 80, the safety operation may: alert the rider to an area in front of the motorcycle 100; encourage the rider to decelerate the motorcycle 100; encourage the rider to reduce a set value which is set as a target speed when the automatic cruise operation is being performed; encourage the rider to travel between lines of vehicles; or encourage the rider to change lanes. As other examples, the safety operation may: output a signal to the automatic cruise execution section 52 so that the automatic cruise execution section 52 decelerates the motorcycle 100 automatically; output a signal to the automatic cruise execution section 52 so that the automatic cruise execution section 52 reduces the set value of the target speed automatically when the automatic cruise operation is being performed; or output a signal to the automatic cruise execution section 52 so that the automatic cruise execution section 52 cancel or stop the automatic cruise operation automatically. The safety operation may output a combination of the above-described signals.

Here, the notification device 80 may warn the rider by sound (that is, a sensation through an auditory organ as a sensory organ), may warn the rider by display (that is, a sensation through a visual organ as the sensory organ), may warn the rider by a vibration (that is, a sensation through a tactile organ as the sensory organ), or may warn the rider by a combination of those. In addition, the notification device 80 may be provided to the motorcycle 100 or may be provided to an accessory such as a helmet that is associated with the motorcycle 100. Furthermore, the notification device 80 may be constructed of a single output device or may be constructed of plural output devices of the same type or different types. Such plural output devices may be provided integrally or may be provided separately. Moreover, the notification device 80 may warn the rider by generating instantaneous acceleration/deceleration to the motorcycle 100. That is, the braking device 60, the drive device 70, or the like may be implemented as the notification device 80.

The state information of the other motorcycle 200 may be information about a speed of the other motorcycle 200 when the other motorcycle 200 is turning a curve. The safety operation execution section 53 determines that it is necessary to cause the motorcycle 100 to execute the safety operation in response to the state information about the speed of the other motorcycle 200. For example, when the speed of the other motorcycle 200 is slower/smaller than a speed of the motorcycle 100 and a difference between the speed of the other motorcycle 200 and the speed of the motorcycle 100 is larger than a reference value, the safety operation execution section 53 determines that it is necessary to cause the motorcycle 100 to execute the safety operation. In this situation, the safety operation preferably may execute at least one of: alerting the rider to the area in front of the motorcycle 100; encouraging the rider to decelerate the motorcycle 100; encouraging the rider to reduce the set value of the target speed when the motorcycle 100 is under the automatic cruise operation; outputting the signal to the automatic cruise execution section 52 so that the automatic cruise execution section 52 decelerates the motorcycle 100 automatically; or outputting the signal to the automatic cruise execution section 52 so that the automatic cruise execution section 52 reduces the set value of the target speed automatically when the automatic cruise operation is being performed. As another example, the other motorcycle 200 may be one of a plurality of other motorcycles 200. In this situation, the state information of the other motorcycle 200 may be information about speeds of a plurality of other motorcycles 200 preferably. By acquiring the state information about the speeds of the other motorcycles 200, the safety operation execution section 53 can determine the necessity of executing the safety operation with greater accuracy. It may be determined whether it is necessary to perform the safety operation by comparing an average value of the speeds of the other motorcycles 200 to the speed of the motorcycle 100. Alternatively, it may be determined whether it is necessary to perform the safety operation by comparing the lowest value of the speeds of the other motorcycles 200 to the speed of the motorcycle 100. In addition, the safety operation is preferably performed at a stage where the motorcycle 100 travels straight, that is, at a stage before the motorcycle 100 is shifted to turn the curve. With such a configuration, the safety operation is performed in a situation where the rider relatively feels at ease, and thus the safety is improved. However, the safety operation may be performed at a stage where the motorcycle 100 turns the curve. Also, in such a case, the safety of the rider is improved.

In the case where, as the other vehicle travel state information, information about the deceleration of the other motorcycle 200 turning the curve is acquired and, for example, in the case where such information is information indicating that the deceleration exceeds a reference value, the safety operation execution section 53 determines that it is necessary for the motorcycle 100 to perform the safety operation. In particular, as the safety operation, at least one of the following is preferably executed: alerting the rider to the area in front of the motorcycle 100; encouraging the rider to decelerate the motorcycle 100; encouraging the rider to reduce the set value of the target speed when the motorcycle 100 is under automatic cruise operation; outputting the signal to the automatic cruise execution section 52 so that the automatic cruise execution section 52 automatically reduces the speed of the motorcycle 100; or outputting the signal to the automatic cruise execution section 52 so that the automatic cruise execution section 52 automatically reduces the set value of the target speed when the motorcycle 100 is under the automatic cruise operation. The other vehicle travel state information is preferably the information about the deceleration of each of the other motorcycles 200 turning the curve. With such a configuration, the accuracy of the determination is improved. It may be determined whether it is necessary to perform the safety operation by comparing an average value of the deceleration of the other motorcycles 200 to the reference value. Alternatively, it may be determined whether it is necessary to perform the safety operation by comparing a maximum value of the deceleration of the other motorcycles 200 to the reference value. In addition, the safety operation is preferably performed at the stage where the motorcycle 100 travels straight, that is, at the stage before the motorcycle 100 is shifted to turn the curve. With such a configuration, the safety operation is performed in the situation where the rider relatively feels at ease, and thus the safety is improved. However, the safety operation may be performed at the stage where the motorcycle 100 turns the curve. Also, in such a case, the safety of the rider is improved.

In the case where, as the other vehicle travel state information, the position information about the other motorcycle 200 turning the curve is acquired and, for example, in the case where such information is information indicating that the other motorcycle 200 travels at a position where a distance from a lane boundary falls below a reference value, the safety operation execution section 53 determines that it is necessary for the motorcycle 100 to perform the safety operation. In particular, as the safety operation, at least one of the following is preferably executed: alerting the rider to the area in front of the motorcycle 100; encouraging the rider to travel between the lines of the vehicles; or outputting the signal to the automatic cruise execution section 52 so that the automatic cruise execution section 52 automatically cancels or temporarily stops the currently-performed automatic cruise operation. The other vehicle travel state information is preferably the position information about the other motorcycles 200 turning the curve. With such a configuration, the accuracy of the determination is improved. It may be determined whether it is necessary to perform the safety operation by comparing an average value of the distances of the other motorcycles 200 from the lane boundary to the reference value. Alternatively, it may be determined whether it is necessary to perform the safety operation by comparing a minimum value of the distances of the other motorcycles 200 from the lane boundary to the reference value. In addition, the safety operation is preferably performed at the stage where the motorcycle 100 travels straight, that is, at the stage before the motorcycle 100 is shifted to turn the curve. With such a configuration, the safety operation is performed in the situation where the rider relatively feels at ease, and thus the safety is improved. However, the safety operation may be performed at the stage where the motorcycle 100 turn the curve. Also, in such a case, the safety of the rider is improved.

In the case where, as the other vehicle travel state information, information about the traveling direction of the other motorcycle 200 turning the curve is acquired and, for example, in the case where such information is information indicating that the other motorcycle 200 is changing the lane, the safety operation execution section 53 determines that it is necessary for the motorcycle 100 to perform the safety operation. In particular, as the safety operation, at least one of the following is preferably executed: alerting the rider to the area in front of the motorcycle 100; encouraging the rider to change lanes; or outputting the signal to the automatic cruise execution section 52 so that the automatic cruise execution section 52 automatically cancels or temporarily stops the currently-performed automatic cruise operation. The other vehicle travel state information is preferably the information about the traveling directions of the other motorcycles 200 turning the curve. With such a configuration, the accuracy of the determination is improved. In the case where all the other motorcycles 200 are changing the lane, it may be determined that it is necessary to perform the safety operation. Alternatively, in the case where one of the other motorcycles 200 is changing the lane, it may be determined that it is necessary to perform the safety operation. In addition, the safety operation is preferably performed at the stage where the motorcycle 100 travels straight, that is, at the stage before the motorcycle 100 is shifted to turn the curve. With such a configuration, the safety operation is performed in the situation where the rider relatively feels at ease, and thus the safety is improved. However, the safety operation may be performed at the stage where the motorcycle 100 turns the curve. Also, in such a case, the safety of the rider is improved.

### <Operation of Rider-Assistance System>

A description will be made on operation of the rider-assistance system according to the embodiment.

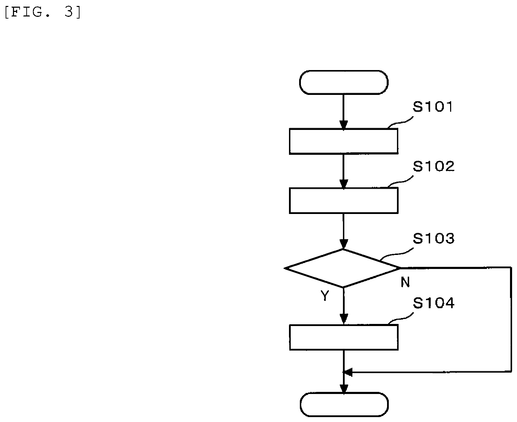

Fig. 3 is a chart of an example of a control flow by the controller in the rider-assistance system according to the embodiment of the present disclosure.

The controller 50 repeatedly executes the control flow illustrated in Fig. 3 while the automatic cruise operation is valid.

### (Acquisition Step)

In step S101, the acquisition section 51 acquires the other vehicle travel state information that is the information about the travel state of the other motorcycle 200 turning the curve in the traveling direction of the motorcycle 100.

### (Automatic cruise execution step)

In step S102, the automatic cruise execution section 52 controls the operation of each of the devices (the braking device 60, the drive device 70, and the like) mounted to the motorcycle 100, so as to cause the motorcycle 100 to perform the automatic cruise operation.

### (Safety operation execution step)

In step S103, the safety operation execution section 53 determines whether it is necessary for the motorcycle 100 to perform the safety operation based on the other vehicle travel state information acquired in step S101. If determining that it is necessary, in step S104, the safety operation execution section 53 causes the motorcycle 100 to perform the safety operation.

### <Effects of Rider-Assistance System>

A description will be made on effects of the rider-assistance system according to the embodiment.

In the rider-assistance system 1, the acquisition section 51 in the controller 50 acquires the other vehicle travel state information, which is the information about the travel state of the other motorcycle 200 turning the curve in the traveling direction of the motorcycle 100, via the wireless communication. Then, the safety operation execution section 53 in the controller 50 causes the motorcycle 100, which is performing the automatic cruise operation, to perform the safety operation based on the other vehicle travel state information acquired by the acquisition section 51. Accordingly, in the automatic cruise operation under the situation where the lane is curved, it is possible to compensate for shortage of the amount of the information by acquiring unique information to the motorcycle. As a result, it is possible to appropriately assist the rider to drive the motorcycle 100.

Preferably, in the rider-assistance system 1, the other vehicle travel state information is the information about the travel states of the other motorcycles 200 turning the curve. With such a configuration, the accuracy of the determination on the necessity of the safety operation is improved. As a result, it is possible to appropriately assist the rider to drive the motorcycle 100.

Preferably, in the rider-assistance system 1, at the stage where the motorcycle 100 travels straight, the safety operation execution section 53 causes the motorcycle 100, which is performing the automatic cruise operation, to perform the safety operation. With such a configuration, the safety operation is performed in the situation where the rider relatively feels at ease. As a result, it is possible to appropriately assist the rider to drive the motorcycle 100.

Preferably, in the rider-assistance system 1, the other vehicle travel state information includes the information about the speed of the other motorcycle 200. For example, due to a fact that stability of body behavior of the motorcycle is lower than other types of vehicles (for example, a passenger car, a truck, and the like), the motorcycle tends to turn the curve at a unique speed. With such a configuration, it is possible to perform the safety operation, for which the speed generated to the other motorcycle 200, that is, a unique driving tendency to the motorcycle on the curve is considered, with the sufficient amount of the information. As a result, driving assistance for the motorcycle 100 by the rider becomes further appropriate.

Preferably, in the rider-assistance system 1, the other vehicle travel state information includes the information about the deceleration of the other motorcycle 200. For example, due to the fact that the stability of the body behavior of the motorcycle is lower than the other types of the vehicles (for example, the passenger car, the truck, and the like), the unique deceleration tends to be generated to the motorcycle on the curve. With such a configuration, it is possible to perform the safety operation, for which the deceleration generated to the other motorcycle 200, that is, the unique driving tendency to the motorcycle on the curve is considered, with the sufficient amount of the information. As a result, the driving assistance for the motorcycle 100 by the rider becomes further appropriate.

Preferably, in the rider-assistance system 1, the other vehicle travel state information includes the position information about the other motorcycle 200. For example, due to a fact that a vehicle width of the motorcycle is narrower than the other types of the vehicles (for example, the passenger car, the truck, and the like), the motorcycle can travel at a unique travel position on the curve. With such a configuration, it is possible to perform the safety operation, for which the travel position of the other motorcycle 200, that is, the unique driving tendency to the motorcycle on the curve is considered, with the sufficient amount of the information. As a result, the driving assistance for the motorcycle 100 by the rider becomes further appropriate.

Preferably, in the rider-assistance system 1, the other vehicle travel state information includes the information about the traveling direction of the other motorcycle 200. For example, due to the fact that the vehicle width of the motorcycle is narrower than the other types of the vehicles (for example, the passenger car, the truck, and the like), the motorcycle can travel in a unique traveling direction on the curve. With such a configuration, it is possible to perform the safety operation, for which the traveling direction of the other motorcycle 200, that is, the unique driving tendency to the motorcycle on the curve is considered, with the sufficient amount of the information. As a result, the driving assistance for the motorcycle 100 by the rider becomes further appropriate.

The present disclosure is not limited to the embodiment that has been described. For example, only a part of the embodiment may be implemented, or parts of the embodiment may be combined.

### Reference Signs List

1: Rider-assistance system
10, 210, 310: Surrounding environment detector
20: Input device
30, 130: Travel state detector
50: Controller
51: Acquisition section
52: Automatic cruise execution section
53: Safety operation execution section
60: Braking device
70: Drive device
80: Notification device
100: Motorcycle
200: Another motorcycle
300: Vehicle around another motorcycle
400: Infrastructure equipment around another motorcycle

## Claims

1. A controller (50) that is configured to maneuver a motorcycle (100), the controller comprising:
an automatic cruise execution section (52) that is configured to cause the motorcycle (100) to perform an automatic cruise operation;
an acquisition section (51) that is configured to acquire a state information of another motorcycle (200) via wireless communication, the state information of the other motorcycle (200) being information about a travel state of the other motorcycle (200) turning a curve in a traveling direction of the motorcycle (100); and
a safety operation execution section (53) that is configured to cause the motorcycle (100) to perform a safety operation in response to the state information of the other motorcycle (200) acquired by the acquisition section (51), the safety operation execution section (53) configured to cause the motorcycle (100) to perform the safety operation when the motorcycle (100) is performing the automatic cruise operation.

2. The controller according to claim 1, wherein
the other motorcycle (200) is one of a plurality of other vehicles, and
the state information of the other motorcycle (200) is information about travel states of the plurality of other motorcycles turning the curve.

3. The controller according to claim 1 or 2, wherein
the safety operation execution section (53) causes the motorcycle (100) to perform the safety operation while the motorcycle (100) travels straight and performs the automatic cruise operation.

4. The controller according to any one of claims 1 to 3, wherein
the state information of the other motorcycle (200) includes information about at least one of a speed, deceleration, a position, or a traveling direction of the other motorcycle (200).

5. The controller according to any one of claims 1 to 4, wherein
the safety operation alerts a rider of the motorcycle (100) to an area in front of the motorcycle (100).

6. The controller according to any one of claims 1 to 4, wherein
the safety operation alerts the rider of the motorcycle (100) to perform a decelerating operation.

7. The controller according to any one of claims 1 to 4, wherein
the safety operation encourages the rider of the motorcycle (100) to reduce a setting value of a target speed during the automatic cruise operation.

8. The controller according to any one of claims 1 to 4, wherein
the safety operation encourages the rider of the motorcycle (100) to travel between lines of vehicles.

9. The controller according to any one of claims 1 to 4, wherein
the safety operation encourages the rider of the motorcycle (100) to change lanes.

10. The controller according to any one of claims 1 to 4, wherein
the safety operation automatically reduces a speed of the motorcycle (100).

11. The controller according to any one of claims 1 to 4, wherein
the safety operation automatically reduces a set value of a target speed which is set during the automatic cruise operation.

12. The controller according to any one of claims 1 to 4, wherein
the safety operation automatically cancels or temporarily stops the automatic cruise operation when the automatic cruise operation is being executed.

13. The controller according to any one of claims 1 to 12, wherein
the automatic cruise operation is an adaptive cruise control operation.

14. The controller according to any one of claims 1 to 12, wherein
the automatic cruise operation is a cruise control operation.

15. A control method for maneuvering a motorcycle (100), the control method comprising:
executing (S102) an automatic cruise operation of the motorcycle (100) by using an automatic cruise execution section (52) included in a controller (50);
acquiring (S101) a state information of another motorcycle (200) via wireless communication by using an acquisition section (51) included in the controller (50), the state information of the other motorcycle (200) being information about a travel state of the other motorcycle (200) turning a curve in a traveling direction of the motorcycle (100); and
executing (S103, S104), by using a safety operation execution section (53) included in the controller (50), a safety operation of the motorcycle (100) in response to the state information of the other motorcycle (200) acquired in the acquisition step (S101), the safety operation execution section (53) configured to cause the motorcycle (100) to perform the safety operation when the motorcycle (100) is performing the automatic cruise operation.
